(19)

Europäisches Patentamt
European Patent Office
Office européen des brevets

(11)   **EP 3 067 148 B1**

(12)         **EUROPEAN PATENT SPECIFICATION**

(45) Date of publication and mention
of the grant of the patent:
**07.09.2022 Bulletin 2022/36**

(21) Application number: **14861067.8**

(22) Date of filing: **05.11.2014**

(51) International Patent Classification (IPC):
**B23K 20/12** *(2006.01)*     **B23K 103/04** *(2006.01)*
**C22C 38/00** *(2006.01)*     B23K 101/18 *(2006.01)*

(52) Cooperative Patent Classification (CPC):
**B23K 20/1275; B23K 20/123; C22C 38/001;
C22C 38/002; C22C 38/005; C22C 38/02;
C22C 38/04; C22C 38/06; C22C 38/42;
C22C 38/44; C22C 38/46; C22C 38/48;
C22C 38/50; C22C 38/54;** B23K 2101/18;   (Cont.)

(86) International application number:
**PCT/JP2014/005568**

(87) International publication number:
**WO 2015/068386 (14.05.2015 Gazette 2015/19)**

(54) **FRICTION STIR WELDING METHOD FOR HIGH-STRENGTH STEEL SHEETS OR PLATES**

REIBRÜHRSCHWEISSVERFAHREN FÜR HOCHFESTE STAHLBLECHE ODER PLATTEN

PROCÉDÉ DE SOUDAGE PAR FRICTION-MALAXAGE POUR FEUILLE D'ACIER À HAUTE
RÉSISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.11.2013 JP 2013231426**

(43) Date of publication of application:
**14.09.2016 Bulletin 2016/37**

(73) Proprietor: **JFE Steel Corporation
Tokyo 100-0011 (JP)**

(72) Inventors:
• **MATSUSHITA, Muneo
Tokyo 100-0011 (JP)**
• **IKEDA, Rinsei
Tokyo 100-0011 (JP)**

(74) Representative: **Grünecker Patent- und
Rechtsanwälte
PartG mbB
Leopoldstraße 4
80802 München (DE)**

(56) References cited:
**EP-A1- 2 395 122        WO-A1-2013/150801
WO-A1-2013/150801    JP-A- 2009 241 084
JP-A- 2010 090 418      JP-A- 2012 513 306
JP-B1- 5 321 766         US-A1- 2010 159 265**

(52) Cooperative Patent Classification (CPC): (Cont.)
    B23K 2103/04

**Description**

TECHNICAL FIELD

The disclosure relates to a friction stir welding method where welding is performed without adding filler material by inserting a rotational tool into a weld portion of working materials, moving the rotational tool while rotating it, and utilizing the softening of the working materials caused by the frictional heat generated between the rotational tool and the working materials, and the plastic flow created by stirring the softened portions with the rotational tool. The disclosure is intended to advantageously resolve the non-uniformity of the heating state and plastic flow state inside the stirred portion which is a concern particularly when applying the friction stir welding method to welding of high-strength structural steel, to achieve sufficient strength and uniform mechanical properties, particularly, toughness.

BACKGROUND

As a friction welding method, JPS62183979A (PTL 1) describes a technique of welding metal materials by rotating both of or one of a pair of metal materials to generate frictional heat in the metal materials to soften said material, and stirring the softened portion to cause a plastic flow.
However, with this technique, since the metal materials which are the subjects to be welded are rotated, the shape and size of the metal materials to be welded are limited.

On the other hand, JPH7505090A (PTL 2) proposes a method of continuously welding working materials in the longitudinal direction using the heat and plastic flow generated between the tool and the working materials by inserting a tool that is made of material that is substantially harder than the working materials into a weld portion of working materials and moving the tool while rotating it.
The welding method described in PTL 2 is referred to as a friction welding method, friction joining method, friction stir welding method, friction stir joining method, or the like. Hereinafter, the welding method such as that described in PTL 2 is referred to as the friction stir welding method.

The friction welding method described in PTL I is a method of welding working materials together by rotating the working materials and using the frictional heat generated between the working materials. On the other hand, with the friction stir welding method described in PTL 2, steel sheets can be welded together by moving the tool while rotating it in a state where the welding members are fixed. Therefore, this technique is advantageous in that continuous solid state bonding can be performed in the longitudinal direction of the members even on members which are substantially infinitely longer in the welding direction. Further, since solid state bonding is performed by utilizing the metal plastic flow caused by the frictional heat generated between the rotational tool and the welding materials, steel sheets can be welded together without melting the weld portion. In addition, the technique of PTL 2 has many advantages. For example, there is less deformation after the welding because of the low heating temperature, there is less defects because the weld portion is not melted, and a filler material is not required.

Use of the friction stir welding method is spreading in the fields of aircrafts, ships, railway cars, automobiles and the like, as a method of welding low melting point metal materials including aluminum alloy or magnesium alloy. This is because, with these low melting point metal materials, it is difficult to obtain satisfying characteristics in the weld portion by the conventional arc welding method, but productivity is enhanced and weld portions of high quality can be obtained by applying the friction stir welding method.

On the other hand, the application of a friction stir welding method to low-alloy welding structural steel which are mainly applied as materials for structures such as buildings, ships, heavy machinery, pipelines, and automobiles is not widely spread compared to low melting point metal materials because of the problem in construction workability and joint characteristics.

As described in JP2003532542A (PTL 3) and JP2003532543A (PTL 4), high abrasion resistance materials such as polycrystalline cubic boron nitride (PCBN) or silicon nitride ($SiN_4$) are currently being used as the rotational tool in friction stir welding of low-alloy welding structural steel.
However, these ceramics are brittle, and therefore sheet thickness and the processing conditions of the steel sheets to be welded are severely restricted in order to prevent damages to the rotational tool.

In welding, less restrictions such as the above mentioned weldable sheet thickness and welding conditions, and higher construction workability, in other words, more easiness in putting to practical use, means there is more practicality.
However, the construction workability of the friction stir welding method on iron and steel was unsatisfactory compared to that of welding such as arc welding which is widely being used for welding iron and steel.

To overcome this problem, JP200831494A (PTL 5) proposes a low-alloy welding structural steel in which the contents of basic elements constituting low-alloy steel such as C, Mn, P, and S as well as the contents of Si, Al, and Ti which are ferrite-stabilizing elements are limited, and the sum of the temperature range width of ferrite single phase and the temperature range width of two phases of austenite and ferrite phases, in an equilibrium state of 700 °C or higher, is made to be 200 °C or higher. In this way, the deformation resistance during friction stir welding is reduced and the construction workability of the friction stir welding method of low-alloy welding structural steel is improved.

On the other hand, as described in Summary of Japan Welding Society National Meeting Lecture, volume 87 (2010) 331 (NPL 1), the problem regarding joint characteristics is that, with the friction stir welding method, the plastic flow state inside the stirred portion is not uniform, and the heating state and the plastic processing state locally vary. It is known that this greatly influences mechanical characteristics inside the stirred portion and toughness particularly becomes non-uniform when welding low-alloy structural steel.

Regarding this point, JP Patent Application No. 2012-86924 (PTL 6) aims at resolving the non-uniformity of toughness resulting from the local variation of the heating state and the plastic processing state inside the stirred portion of friction stir welding of low-alloy welding structural steel. PTL 6 describes a friction stir welding method where the steel components which disperse stable and fine precipitates even at a high temperature are specified by welding conditions controlling the heat hysteresis of the joint portion.

However, for friction stir welding of high-strength structural steel with tensile strength of 800 MPa or more, a satisfactory solution that achieves sufficient strength in the stirred portion and resolves non-uniformity of the toughness inside the stirred potion, has not been discovered. WO2013/150801 A1 discloses a method of friction stir welding a steel sheet.

CITATION LIST

Patent Literature

PTL 1: JPS62183979A
PTL 2: JPH7505090A
PTL 3: JP2003532542A
PTL 4: JP2003532543A
PTL 5: JP200831494A
PTL 6: JP Patent Application No. 2012-86924

Non-patent Literature

NPL 1: Summary of Japan Welding Society National Meeting Lecture, volume 87 (2010) 331

SUMMARY

(Technical Problem)

This disclosure has been developed in light of the above circumstances. It could be helpful to provide a method of obtaining sufficient strength in the stirred portion and resolving non-uniformity of toughness resulting from the local variation of the heating state and the plastic processing state, in friction stir welding of high-strength structural steel having tensile strength of 800 MPa or more. Accordingly, a friction stir welding method where steel components and friction stir welding conditions are strictly controlled, is described herein.

(Solution to Problem)

As a result of intensive studies made to solve the above problems, we discovered the following.

a) In the friction stir welding method, the amount of heat inputted to the joint can be converted from the work load of tool rotation obtained from tool rotational speed, tool rotational torque, welding speed, thickness of the material to be welded, and the like. Specifically, work load per hour is obtained by multiplying the tool rotational speed and the tool rotational torque, and by dividing the resultant value by the welding speed, work load per unit length in the welding direction is obtained. It is thought that this corresponds to welding heat input. In the disclosure, this welding heat input is referred to as HI, and is determined by formula (2).

$$\text{HI (kJ/mm)} = (6.28 \times RT \times RS)/TS/1000 \quad \text{---} \quad (2)$$

where RT represents tool rotational torque (N·m), RS represents tool rotational speed (rpm), and TS represents welding speed (mm/min). Further, by managing this welding heat input HI, the heat hysteresis of the friction stir welded portion can be controlled.

b) Mechanical properties of steel material such as strength, toughness and the like are largely affected by the microstructure. In friction stir welding of high-strength structural steel having tensile strength of 800 MPa or more, it is necessary for the stirred portion to be a microstructure mainly composed of a fine bainite structure to obtain sufficient joint strength, and resolve non-uniformity of toughness in the stirred portion to achieve uniform and high toughness.

c) In friction stir welding of steel material, the stirred portion is heated to or higher than the temperature at which austenite to ferrite transformation occurs. The microstructure at room temperature is formed by austenite to ferrite transformation in the subsequent cooling process, and the appearance of the microstructure is greatly influenced by the cooling time from 800 °C to 500 °C. If the cooling time is long, a ferrite-pearlite microstructure forms. As the cooling time shortens, coarse bainite, fine bainite, and martensite form in the stated order from the higher to lower temperatures (i.e., coarse bainite forms at the highest temperature and martensite at the lowest), and the microstructure is increased in strength.

By managing the welding heat input HI as described above, heat hysteresis of the friction stir welded portion is controlled, and the cooling time from 800 °C to 500 °C shall be set to a range where fine bainite is obtained.

d) However, the relation between cooling time and austenite to ferrite transformation is influenced by the steel components.

Therefore, we defined the range of welding heat input HI that yields fine bainite in the stirred portion by the relation with quench hardenability index Pcm which uses the alloying element content as a parameter to achieve sufficient strength in the stirred portion, and resolve non-uniformity of toughness resulting from local variation of the heating state and the plastic processing state to achieve uniform and high toughness, in friction stir welding of high-strength structural steel.

Our methods are based on these findings.

We thus provide:

1. A friction stir welding method comprising:

inserting a rotational tool into a weld portion of steel sheets or plates, the rotational tool comprising a shoulder and a pin disposed on the shoulder and sharing an axis of rotation with the shoulder, at least the shoulder and pin being made of a material harder than the steel sheets or plates as working materials; and

moving the rotational tool while rotating the tool, so that the steel sheets or plates are softened by frictional heat generated between the rotational tool and the steel sheets or plates, and a plastic flow is generated by the softened part being stirred by the rotational tool, and the steel sheets or plates are welded, wherein

the steel sheets or plates are each made of high-strength welding structural steel having a chemical composition containing (or consisting of) by mass%

C: 0.03 % to 0.12 %,
Si: 0.6 % or less,
Mn: 1.5 % to 3.0 %,
P: 0.015 % or less,
S: 0.002 % or less,
Al: 0.1 % or less,
Ti: 0.005 % to 0.030 %,
Nb: 0.01 % to 0.10 %,
N: 0.001 % to 0.008 %, and
O: 0.03 % or less,
a Pcm value calculated by the following formula (I) satisfying $0.18 \leq Pcm \leq 0.30$, and
the balance being Fe and incidental impurities,

friction stir welding conditions fall under ranges of

tool rotational speed: 100 rpm to 1000 rpm,
tool rotational torque: 50 N·m to 500 N·m, and
welding speed: 10 mm/min to 1000 mm/min, and

a welding heat input HI defined by the following formula (2) falls under a range of 1.5 to 20, and satisfies a range of the following formula (3) in relation with Pcm,

$$Pcm \ (\%) = C + Si/30 + (Mn + Cr + Cu)/20 + Ni/60 + Mo/15 + V/10 + 5B \ \text{---} \ (1)$$

$$HI \ (kJ/mm) = (6.28 \times RT \times RS)/TS/1000 \ \text{---} \ (2)$$

where RT represents tool rotational torque (N·m), RS represents tool rotational speed (rpm), and TS represents welding speed (mm/min),

$$1.5 \times 10^9 \times (Pcm)^{13.8} \leq HI \leq 2.1 \times 10^8 \times (Pcm)^{10.6} \ \text{---} \ (3).$$

2. The friction stir welding method according to aspect 1, wherein
the high-strength welding structural steel further contains by mass% one or more elements selected from

Cu: 1.0 % or less,
Ni: 1.5 % or less,
Mo: 1.0 % or less,
Cr: 1.0 % or less,
V: 0.10 % or less,
W: 0.2 % to 1.2 %, and
B: 0.0001 % to 0.005 %.

3. The friction stir welding method according to aspect 1 or 2, wherein
the high-strength welding structural steel further contains by mass% one or more elements selected from

Ca: 0.01 % or less,
REM: 0.02 % or less,
Mg: 0.01 % or less, and
Zr: 0.0005 % to 0.03 %.

(Advantageous Effect)

According to the disclosure, sufficient strength can be obtained in the stirred portion in friction stir welding of high-strength structural steel having tensile strength of 800 MPa or more. Further, the non-uniformity of toughness resulting from the local variation of the heating state and the plastic processing state is resolved, and uniform and good toughness is obtained.

BRIEF DESCRIPTION OF THE DRAWINGS

In the accompanying drawings:

FIG. 1 shows how to carry out friction stir welding according to the disclosure;
FIG. 2 shows the shape and size of a rotational tool used on steel plates with thickness of 6 mm;
FIG. 3 shows the shape and size of a rotational tool used on steel plates with thickness of 12 mm;
FIG. 4 shows how to collect a tensile test specimen from a friction stir welded joint, and the shape and size of a test specimen; and
FIG. 5 shows how to collect Charpy impact test specimens from a friction stir welded joint.

DETAILED DESCRIPTION

Our methods will be described in detail below.
First, reasons for limiting the chemical composition of high-strength welding structural steel which are the subjects of welding in the disclosure to the aforementioned ranges will be explained. Unless otherwise specified, mass% will be simply represented by % hereinafter.

C: 0.03 % to 0.12 %

C is an element that enhances strength, and in order to obtain strength desired in the disclosure (800 MPa or more), it needs to be contained in an amount of 0.03 % or more. However, if more than 0.12 % of C is contained, base material toughness and weldability deteriorate. Therefore, the C content is set to a range of 0.03 % to 0.12 %, and preferably 0.05 % to 0.09 %.

Si: 0.6 % or less

Si is an effective element for enhancing strength of the base material and the heat-affected zone (HAZ) through solid solution strengthening. However, if more than 0.6 % of Si is added, toughness is significantly reduced, and therefore the upper limit of the Si content is set to 0.6 %, and preferably a range of 0.5 % or less. The lower limit of the Si content is not particularly limited. However, since Si is an element that enhances strength, the lower limit of the Si content is preferably 0.05 % in order to obtain a sufficient strength.

Mn: 1.5 % to 3.0 %

Mn is an element that is effective for enhancing strength, and from the perspective of securing a desired strength, it needs to be contained in an amount of 1.5 % or more. However, if the Mn content exceeds 3.0 %, the microstructure is formed with a coarse bainite when air cooling is performed after rolling, and base material toughness is reduced. Therefore, the Mn content is limited to a range of 1.5 % to 3.0 %, and preferably 1.8 % to 2.8 %.

P: 0.015 % or less, S: 0.002 % or less

P and S both exist in steel as incidental impurities. Since P and S are elements which significantly segregate in the central segregation portion, the upper limits thereof are each set to 0.015 % and 0.002 % to suppress the decrease of toughness resulting from the segregation portion of the base material. Preferably, the P content is 0.010 % or less and the S content is 0.0018 % or less. However, excessive reduction of P and S leads to an increase in costs, and therefore it is desirable to set the lower limits of P and S to around 0.001 % and 0.0005 % respectively.

Al: 0.1 % or less

Al serves as a deoxidizing element. However, if more than 0.1 % of Al is added, the degree of cleanliness in steel decreases and becomes the cause of toughness deterioration, and therefore the Al content is set to 0.1 % or less, and preferably 0.06 % or less. The lower limit of the Al content is not particularly limited. However, in order to sufficiently obtain a deoxidizing effect, the lower limit of the Al content is preferably 0.005 %.

Ti: 0.005 % to 0.030 %

Ti is effective for forming nitride and reducing solute N content in steel. Further, the precipitated TiN suppresses and prevents coarsening of austenite grains with its pinning effect, and contributes to toughness improvement of the base material and HAZ. In order to obtain the necessary pinning effect, Ti needs to be added in an amount of 0.005 % or more. However, if more than 0.030 % of Ti is added, a carbide is formed and due to the precipitation-hardening thereof, toughness significantly deteriorates. Therefore, the upper limit of Ti is set to 0.030 %, and preferably a range of 0.010 % to 0.025 %.

Nb: 0.01 % to 0.10 %

Nb is a necessary element for forming carbide to prevent temper softening particularly in the heat-affected zone (HAZ) which is subjected to two or more heat cycles to thereby obtain a required HAZ strength. Further, Nb provides an effect of widening the temperature region in which austenite remains non-recrystallized during hot rolling, and Nb needs to be added in an amount of 0.01 % or more particularly for setting said temperature region to be a temperature up to 950 °C. However, if more than 0.10 % of Nb is added, the toughness of HAZ significantly deteriorates. Therefore, the upper limit is set to 0.10 %, and preferably a range of 0.02 % to 0.08 %.

N: 0.001 % to 0.008 %

N normally exists in steel as incidental impurities. However, as previously mentioned, TiN which suppresses coarsening of austenite grains is formed by adding Ti, and in order to obtain a required pinning effect, N needs to exist in steel in an amount of 0.001 % or more. However, if the N content exceeds 0.008 %, the adverse effect of solute N becomes significant when TiN dissolves in the weld, particularly in a region near the fused line which is heated to 1450 °C or higher. Therefore, the upper limit of the N content is set to 0.008 %, and preferably a range of 0.002 % to 0.006 %.

O: 0.03 % or less

Since O generates a non-metal inclusion and deteriorates the degree of cleanliness of steel and toughness, the O content is set to 0.03 % or less, and preferably 0.02 % or less. However, since excessive reduction of the O content leads to an increase in costs, it is desirable for the lower limit of the O content to be around 0.0003 %.

The basic components of the disclosure are as described above. In the disclosure, one or more elements selected from Cu, Ni, Mo, Cr, V, W and B may be added for the purpose of further enhancing characteristics.

Cu: 1.0 % or less

Cu serves as a quench hardenability improving element, and may be used as an alternative of adding a large amount of Mn. However, if more than 1.0 % of Cu is added, cracks are caused, and therefore the upper limit of Cu is set to 1.0 %. From the perspective of advantageously exhibiting the additive effect of Cu, the lower limit of the Cu content is preferably 0.05 %.

Ni: 1.5 % or less

Ni is also a useful element that serves as a quench hardenability improving element and does not deteriorate toughness when added to the chemical composition. However, since Ni is an expensive element, adding more than 1.5 % of Ni leads to an increase in manufacturing costs. Therefore, the upper limit of Ni is set to 1.5 %. From the perspective of advantageously exhibiting the additive effect of Ni, the lower limit of the Ni content is preferably 0.05 %.

Mo: 1.0 % or less

Mo serves as a quench hardenability improving element, and may be used as an alternative of adding a large amount of Mn. However, Mo is an expensive element and even if more than 1.0 % of Mo is added, the effect of increasing strength reaches a plateau. Therefore, when adding Mo, the upper limit thereof is set to 1.0 %. From the perspective of advantageously exhibiting the additive effect of Mo, the lower limit of the Mo content is preferably 0.02 %.

Cr: 1.0 % or less

Cr also serves as a quench hardenability improving element, and may be used as an alternative of adding a large amount of Mn. However, if more than 1.0 % of Cr is added, HAZ toughness significantly deteriorates. Therefore, when adding Cr, the upper limit thereof is set to 1.0 %. From the perspective of advantageously exhibiting the additive effect of Cr, the lower limit of the Cr content is preferably 0.05 %.

V: 0.10 % or less

V precipitates and hardens during welding of multi-thermal cycles and effectively contributes to preventing softening of HAZ when added together with Nb. However, if more than 0.10 % of V is added, precipitation-hardening becomes significant and leads to deterioration of HAZ toughness. Therefore, when adding V, the upper limit thereof is set to 0.10 %. From the perspective of advantageously exhibiting the additive effect of V, the lower limit of the V content is preferably 0.003 %.

W: 0.2 % to 1.2 %

W is a useful element for improving quench hardenability of steel and obtaining a microstructure mainly composed of bainite. Further, the addition of W provides an effect of further enhancing the quench hardenability improving effect of steel obtained by adding B. Further, if W is added together with Nb, there is an effect of suppressing recrystallization of austenite during controlled rolling, and refining austenite microstructure. To obtain this effect, W needs to be added at least in the amount of 0.2 %. However, since excessive addition of W may deteriorate HAZ toughness and field weldability, and reduce the quench hardenability improving effect of B, the upper limit thereof is set to 1.2 %.

B: 0.0001 % to 0.005 %

B segregates in austenite grain boundary and suppresses ferrite transformation and contributes particularly to preventing reduction of HAZ strength. To obtain this effect, B needs to be added in an amount of 0.0001 % or more. However, even if more than 0.005 % of B is added, the effect thereof reaches a plateau. Therefore, when adding B, the upper limit thereof is set to 0.005 %.

In the disclosure, one or more elements selected from Ca, REM, Mg and Zr may be added in addition to the above described elements.

Ca: 0.01 % or less

Ca is an effective element for morphological control of sulfide in steel, and by adding Ca, formation of MnS which is harmful to toughness is suppressed. However, if more than 0.01 % of Ca is added, a cluster of CaO-CaS is formed and toughness deteriorates. Therefore, when adding Ca, the upper limit thereof is set to 0.01 %. From the perspective of advantageously exhibiting the additive effect of Ca, the lower limit of Ca content is preferably 0.001 %.

REM: 0.02 % or less

REM is also an effective element for morphological control of sulfide in steel, and by adding REM, formation of MnS which is harmful to toughness is suppressed. However, REM is an expensive element and even if more than 0.02 % of REM is added, the effect thereof reaches a plateau. Therefore, when adding REM, the upper limit thereof is set to 0.02 %. From the perspective of advantageously exhibiting the additive effect of REM, the lower limit of REM content is preferably 0.001 %.

Mg: 0.01 % or less

Mg forms a fine oxide in steel during the steelmaking process, and provides a pinning effect where coarsening of austenite grains is suppressed particularly in the HAZ. However, if more than 0.01 % of Mg is added, the degree of cleanliness in steel is reduced, and toughness is reduced. Therefore, when adding Mg, the upper limit thereof is set to 0.01 %. From the perspective of advantageously exhibiting the additive effect of Mg, the lower limit of the Mg content is preferably 0.001 %.

Zr: 0.0005 % to 0.03 %

Zr forms a carbonitride in steel, and provides a pinning effect where coarsening of austenite grains is suppressed particularly in the heat-affected zone. To obtain a sufficient pinning effect, Zr needs to be added in an amount of 0.0005 % or more. However, if more than 0.03 % of Zr is added, the degree of cleanliness in steel significantly deteriorates and leads to a reduction of toughness. Therefore, when adding Zr, the upper limit thereof is set to 0.03 %.

Pcm: 0.18 to 0.30

In the disclosure, Pcm is an index indicating welding crack sensitivity and is represented by formula (1):

$$Pcm (\%) = C + Si/30 + (Mn + Cr + Cu)/20 + Ni/60 + Mo/15 + V/10 + 5B \text{ --- (1)}$$

In the disclosure, the lower limit of this Pcm value is set to 0.18 for the purpose of achieving a joint strength of 800 MPa or more. However, if the Pcm value exceeds 0.30, base material toughness and weldability deteriorate. Therefore, the upper limit of Pcm is set to 0.30, and preferably a range of 0.190 to 0.260.

The reasons for limiting the welding conditions in the friction stir welding method are as follows.

Tool rotational speed: 100 rpm to 1000 rpm

In order to generate frictional heat between the rotational tool and the weld portion of the workpiece, and generate a plastic flow by stirring the weld portion softened by the heat with the tool, the tool rotational speed must be appropriately controlled. If the tool rotational speed is less than 100 rpm, an unwelded portion may be formed in the weld portion due to the lack of heat generation and plastic flow, or the rotational tool may be damaged due to the excessive load placed thereon. On the other hand, if the tool rotational speed exceeds 1000 rpm, sufficient thickness may not be obtained in the weld portion because the heat generation and plastic flow become excessive and softened metal chips off from the weld portion as burrs, or the rotational tool may be excessively heated and damaged.

Therefore, the tool rotational speed is set to a range of 100 rpm to 1000 rpm, and preferably a range of 120 rpm to 750 rpm.

Tool rotational torque: 50 N·m to 500 N·m

In order to generate frictional heat between the rotational tool and the weld portion of the workpiece, and generate a plastic flow by stirring the weld portion softened by the heat with the tool, the tool rotational torque must be set within an appropriate range. If the tool rotational torque is less than 50 N·m, an unwelded portion may be formed in the weld portion due to the lack of heat generation and plastic flow, or the rotational tool may be damaged due to the excessive load placed thereon. On the other hand, if the tool rotational torque exceeds 500 N·m, sufficient thickness may not be obtained in the weld portion because the heat generation and plastic flow become excessive and softened metal chips off from the weld portion as burrs, or the rotational tool may be excessively heated and damaged. Therefore, the tool rotational torque is set to a range of 50 N·m to 500 N·m, and preferably a range of 100 N·m to 400 N·m.

Welding speed: 10 mm/min to 1000 mm/min

A higher welding speed is preferable from the perspective of construction workability. However, there is an appropriate range for successfully obtaining joints without defects. Specifically, if the welding speed is lower than 10 mm/min, heat generation becomes excessive, and significantly deteriorates the toughness of the weld portion. On the other hand, if the welding speed exceeds 1000 mm/min, an unwelded portion may be formed in the weld portion due to the lack of heat generation and plastic flow, or the rotational tool may be damaged due to the excessive load placed thereon. Therefore, the welding speed is set to a range of 10 mm/min to 1000 mm/min, and preferably a range of 100 mm/min to 900 mm/min.

Welding Heat Input HI: 1.5 to 20, and $1.5 \times 10^9 \times (Pcm)^{13.8}$ to $2.1 \times 10^8 \times (Pcm)^{10.6}$

In the disclosure, it is necessary for the welding heat input HI defined by formula (2) to fall under 1.5 to 20, and to satisfy the range of formula (3) in relation with Pcm:

$$HI (kJ/mm) = (6.28 \times RT \times RS)/TS/1000 \quad \text{---} \quad (2)$$

where RT represents tool rotational torque (N·m), RS represents tool rotational speed (rpm), and TS represents welding speed (mm/min).

$$1.5 \times 10^9 \times (Pcm)^{13.8} \leq HI \leq 2.1 \times 10^8 \times (Pcm)^{10.6} \quad \text{---} \quad (3)$$

The quotient obtained by dividing the product of the tool rotational torque (RT) and tool rotational speed (RS) by the welding speed (TS) is the amount of heat per unit length in welding direction, and this is defined as the welding heat input HI. If this HI is less than 1.5, an unwelded portion may be formed in the weld portion due to the lack of heat generation and plastic flow, or the rotational tool may be damaged due to the excessive load placed thereon. On the other hand, if the HI exceeds 20, heat generation becomes excessive and the softened material scatters around the rotational tool and becomes lost to thereby cause defects of holes in the weld portion.

Further, by limiting the HI to a range of $1.5 \times 10^9 \times (Pcm)^{13.8}$ to $2.1 \times 10^8 \times (Pcm)^{10.6}$, the stirred portion is made to be a microstructure mainly composed of a fine bainite structure. In this way, a sufficient strength is obtained in the stirred portion, and the non-uniformity of toughness resulting from local variation of the heating state and the plastic processing state is resolved and high toughness is uniformly achieved.

As used herein, "mainly composed of fine bainite structure" means that the mean grain size of bainite is 5 $\mu$m

or less and the area ratio of bainite with respect to the entire microstructure is 80 % or more. The area ratio of bainite with respect to the entire microstructure may also be 100 %. Although the lower limit of the mean grain size of bainite is not particularly limited, it is normally around 2 $\mu$m.

EXAMPLES

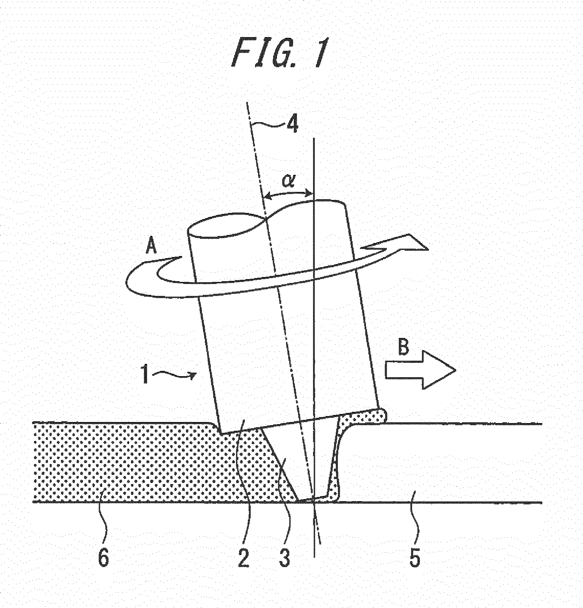

High-strength structural steel plates having the chemical compositions shown in Table 1 (plate thickness: 6 mm, 12 mm) were used to perform friction stir welding. FIG. 1 shows a schematic diagram of friction stir welding. In the figure, reference numeral 1 indicates a rotational tool, reference numeral 2 indicates a shoulder of the rotational tool, reference numeral 3 indicates a pin, reference numeral 4 indicates an axis of rotation, reference numeral 5 indicates a steel plate, reference numeral 6 indicates a weld portion, and "$\alpha$" indicates an angle of advance.

The joint butting face of the steel plates was a non-angled or so-called I-type groove, and welding was performed with a one-sided single pass in a surface state as for milling. A rotational tool manufactured from polycrystalline cubic boron nitride (PCBN) material was used as the rotational tool, and when welding, the weld portion was shielded with argon gas to prevent oxidation thereof.

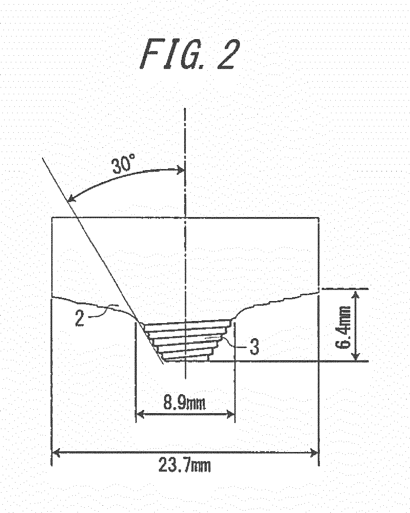

As shown in FIG. 2, for steel plates with thickness of 6 mm, a rotational tool with a shape and size such that the shoulder 2 has a convex shape with a spiral and the pin 3 also has a spiral was used, and welding was performed with the angle of advance $\alpha$ of the tool set to 0°.

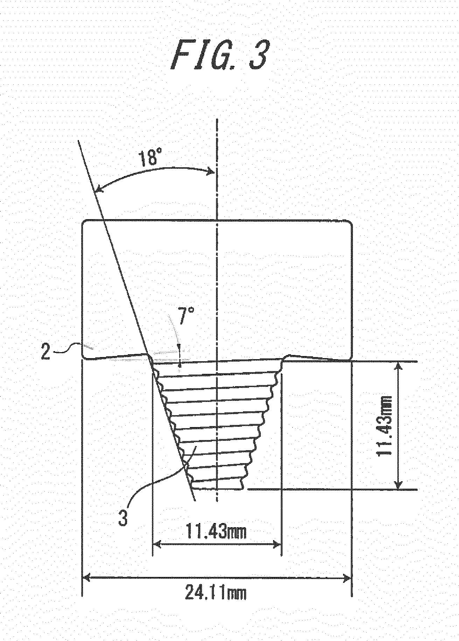

By contrast, it can be seen from FIG. 3 that, for steel plates with thickness of 12 mm, a rotational tool with a shape and size such that the shoulder 2 has a recessed shape with no spiral and the pin 3 has a spiral was used, and welding was performed with the angle of advance $\alpha$ of the tool set to 3.5°.

Table 2 lists the combinations of target steels and welding conditions.

In Table 2, Nos. 1 to 7, 16 to 22, and 26 are examples satisfying the requirements of the disclosure, and Nos. 8 to 15, and 23 to 25 are comparative examples which do not satisfy the requirements of the disclosure.

[Table 1]

Table 1

| Steel Type | Chemical Composition (mass%) | | | | | | | | | | | | | | | | | | | | | Pcm |
|---|---|---|---|---|---|---|---|---|---|---|---|---|---|---|---|---|---|---|---|---|---|---|
| | C | Si | Mn | P | S | Al | Ti | Nb | N | O | Cu | Ni | Mo | Cr | V | W | B | Ca | Mg | REM | Zr | |
| A | 0.065 | 0.10 | 2.01 | 0.010 | 0.001 | 0.031 | 0.013 | 0.028 | 0.0040 | 0.0009 | 0.40 | 0.40 | 0.20 | 0.20 | 0.045 | - | 0.0010 | 0.0020 | - | - | - | 0.228 |
| B | 0.050 | 0.30 | 1.95 | 0.007 | 0.001 | 0.025 | 0.008 | 0.060 | 0.0030 | 0.0010 | 0.20 | 0.50 | 0.30 | - | 0.030 | - | - | - | - | 0.0080 | - | 0.199 |
| C | 0.126 | 0.23 | 0.97 | 0.009 | 0.002 | 0.036 | 0.002 | 0.001 | 0.0043 | 0.0007 | - | - | - | - | - | - | - | - | - | - | - | 0.182 |
| D | 0.060 | 0.28 | 1.60 | 0.006 | 0.002 | 0.022 | 0.012 | 0.001 | 0.0045 | 0.0015 | - | - | 0.30 | - | 0.030 | - | - | - | - | - | - | 0.172 |
| E | 0.080 | 0.24 | 1.90 | 0.007 | 0.001 | 0.030 | 0.015 | 0.100 | 0.0039 | 0.0010 | - | - | - | - | - | - | - | - | - | - | - | 0.183 |
| F | 0.072 | 0.11 | 1.80 | 0.009 | 0.001 | 0.029 | 0.013 | 0.027 | 0.0039 | 0.0010 | 0.40 | 0.40 | 0.20 | 0.20 | 0.045 | - | 0.0009 | - | 0.0030 | - | - | 0.225 |
| G | 0.073 | 0.09 | 1.82 | 0.010 | 0.001 | 0.030 | 0.013 | 0.030 | 0.0041 | 0.0007 | 0.38 | 0.39 | 0.19 | 0.22 | 0.043 | - | 0.0009 | - | - | - | 0.0020 | 0.225 |
| H | 0.070 | 0.22 | 1.53 | 0.006 | 0.002 | 0.050 | 0.007 | 0.010 | 0.0030 | 0.0009 | 0.01 | 0.01 | - | 0.02 | 0.002 | - | - | - | - | - | - | 0.156 |
| I | 0.045 | 0.10 | 2.75 | 0.010 | 0.001 | 0.030 | 0.014 | 0.033 | 0.0040 | 0.0008 | 0.40 | 0.70 | 0.70 | 0.60 | 0.045 | - | 0.0022 | - | - | - | - | 0.310 |
| J | 0.085 | 0.70 | 1.29 | 0.006 | 0.001 | 0.027 | 0.011 | 0.044 | 0.0047 | 0.0013 | - | - | - | - | - | - | - | - | - | - | - | 0.173 |
| K | 0.073 | 0.09 | 1.82 | 0.010 | 0.001 | 0.030 | 0.013 | 0.030 | 0.0041 | 0.0007 | 0.38 | 0.39 | 0.19 | 0.22 | 0.043 | 0.50 | 0.0009 | - | - | - | - | 0.225 |

[Table 2]

Table 2

| No. | Target Steel Plate | | Welding Conditions | | | | Upper and Lower Limit Values of H1 | | Remarks |
|---|---|---|---|---|---|---|---|---|---|
| | Please Thickness (nm) | Steel Type | Tool Rotational Speed (nm) | Tool Rotational Torque (Nm) | Welding Speed (mm/min) | HI (kJ/mm) | Lower Limit Value | Uppel Limit Value | |
| 1 | 6 | A | 350 | 151 | 76.2 | 4.4 | 2.1 | 20.0 | Example |
| 2 | 6 | A | 350 | 189 | 177.8 | 2.3 | 2.1 | 20.0 | Example |
| 3 | 6 | A | 550 | 148 | 177.8 | 2.9 | 2.1 | 20.0 | Example |
| 4 | 12 | A | 450 | 127 | 50.8 | 7.1 | 2.1 | 20.0 | Example |
| 5 | 6 | B | 350 | 161 | 76.2 | 4.6 | 1.5 | 7.8 | Example |
| 6 | 6 | B | 350 | 198 | 177.8 | 2.4 | 1.5 | 7.8 | Example |
| 7 | 6 | B | 550 | 136 | 177.8 | 2.6 | 1.5 | 7.8 | Example |
| 8 | 6 | A | 350 | 198 | 228.6 | 1.9 | 2.1 | 20.0 | Comparative example |
| 9 | 6 | B | 550 | 125 | 25.4 | 17.0 | 1.5 | 7.8 | Comparative example |
| 10 | 12 | B | 550 | 117 | 25.4 | 15.9 | 1.5 | 7.8 | Comparative example |
| 11 | 6 | C | 350 | 151 | 76.2 | 4.4 | 1.5 | 3.0 | Comparative example |
| 12 | 6 | C | 350 | 183 | 177.8 | 2.3 | 1.5 | 3.0 | Comparative example |
| 13 | 6 | C | 550 | 139 | 177.8 | 2.7 | 1.5 | 3.0 | Comparative example |
| 14 | 12 | D | 550 | 110 | 50.8 | 7.5 | 1.5 | 1.7 | Comparative example |
| 15 | 12 | D | 450 | 136 | 25.4 | 15.1 | 1.5 | 1.7 | Comparative example |

13

EP 3 067 148 B1

| No. | Target Steel Plate | | Welding Conditions | | | | Upper and Lower Limit Values of H1 | | Remarks |
|---|---|---|---|---|---|---|---|---|---|
| | Please Thickness (nm) | Steel Type | Tool Rotational Speed (nm) | Tool Rotational Torque (Nm) | Welding Speed (mm/min) | HI (kJ/mm) | Lower Limit Value | Uppel Limit Value | |
| 16 | 6 | A | 100 | 131 | 12.7 | 6.5 | 2.1 | 20.0 | Example |
| 17 | 6 | B | 1000 | 247 | 889 | 1.7 | 1.5 | 7.8 | Example |
| 18 | 6 | A | 350 | 73 | 12.7 | 12.6 | 2.1 | 20.0 | Example |
| 19 | 6 | B | 150 | 431 | 279.4 | 1.5 | 1.5 | 7.8 | Example |
| 20 | 6 | E | 550 | 155 | 177.8 | 3.0 | 1.5 | 3.2 | Example |
| 21 | 6 | F | 550 | 175 | 177.8 | 3.4 | 1.7 | 20.0 | Example |
| 22 | 6 | G | 550 | 172 | 177.8 | 3.3 | 1.7 | 20.0 | Example |
| 23 | 6 | H | 350 | 143 | 76.2 | 4.1 | * | * | Comparative example |
| 24 | 6 | I | 350 | 184 | 177.8 | 2.3 | * | * | Comparative example |
| 25 | 6 | J | 350 | 167 | 177.8 | 2.1 | 1.5 | 1.8 | Comparative example |
| 26 | 6 | K | 350 | 175 | 177.8 | 3.4 | 1.7 | 20.0 | Example |

EP 3 067 148 B1

Samples were cut out from the friction stir welded joints in Table 2 and polished. Then the microstructures thereof in the plate thickness cross-section were exposed using a 3 % natal solution, imaged in three fields of view at the 1/4 position in the plate thickness direction using a scanning electron microscope (SEM) at a magnification of 3000, the area ratio of each phase was determined by image processing, and the microstructure of the stirred portion was identified.

Further, in the SEM photographs at a magnification of 3000 which were used for identification of the microstructure of the stirred portion, two 80 mm long straight lines having an inclination of 45° with respect to the plate thickness direction were drawn orthogonally, the lengths of the straight lines crossing respective grains of the bainite phase were measured and the mean value of the lengths of the straight lines was calculated to obtain the mean grain size of bainite.

The evaluation results are shown in Table 3.

Fine bainite in Table 3 refers to microstructure mainly composed of fine bainite structure (i.e. microstructure in which the mean grain size of bainite is 5 $\mu$m or less and the area ratio of bainite with respect to the entire microstructure is 80 % or more).

Coarse bainite refers to microstructure in which the mean grain size of bainite exceeds 15 $\mu$m and the area ratio of bainite with respect to the entire microstructure is 60 % or more.

Fine bainite + martensite refers to microstructure in which the area ratio of bainite and martensite with respect to the entire microstructure is 90 % or more in total, and the area ratio of martensite is 5 % or more, and the mean grain size of bainite is 5 $\mu$m or less.

In addition, fine bainite + coarse bainite refers to microstructure in which the area ratio of bainite with a mean grain size exceeding 15 $\mu$m with respect to the entire microstructure is more than 20 % and less than 60 %, and the balance is bainite with a mean grain size of 5 $\mu$m or less.

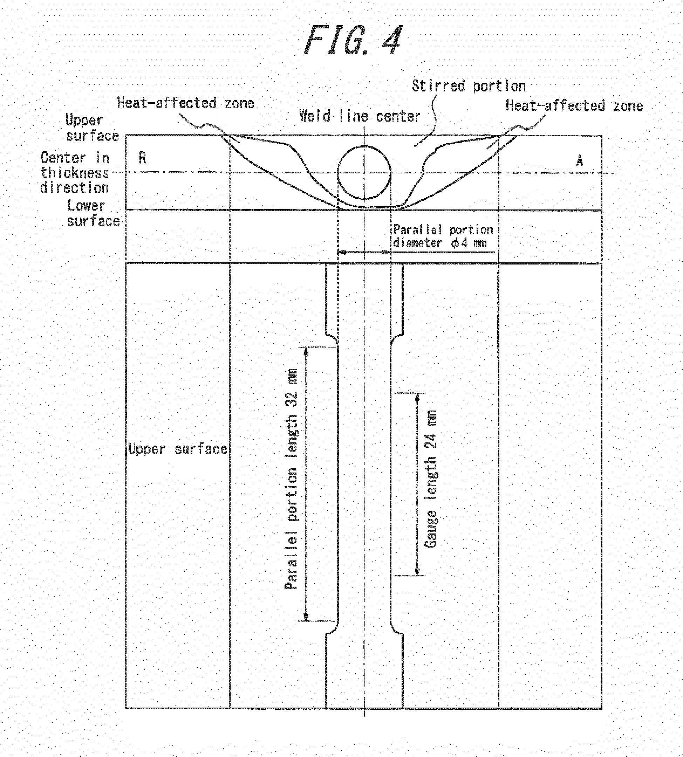

Further, from the friction stir welded joints in Table 2, tensile test specimens sized as shown in FIG. 4 were collected at the specimen sampling positions as shown in the same figure, and tensile tests were performed on the stirred portions.

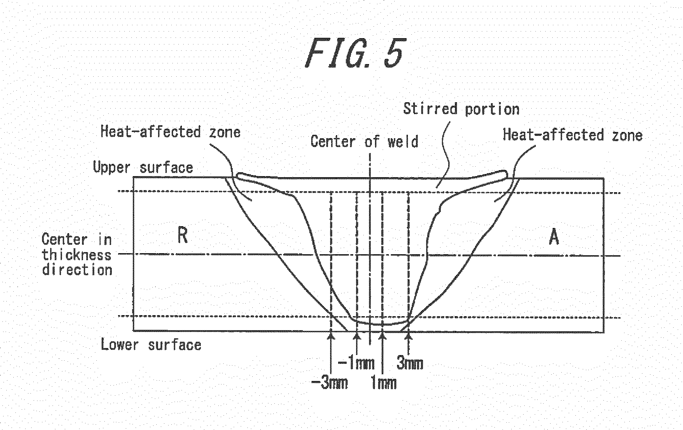

Further, 5 mm wide sub-size #3 test specimens as described in JIS Z2202(1998) were collected, and using the method prescribed in JIS Z2242, Charpy impact tests were performed on the stirred portions. As illustrated in FIG. 5, each test specimen was collected by cutting the upper surface and lower surface of the joint so that the plate thickness center line of the joint overlapped the center line in the width of the test specimen. Taking the weld line center to be the origin, each specimen was notched at four different positions: -3 mm, -1 mm, 1 mm, and 3 mm, with the retreating side (R in FIG. 5) direction being negative, and the advancing side (A in FIG. 5) direction being positive.

The tensile strength and the absorption energy at -40 °C obtained in the above tensile tests and Charpy impact tests at a test temperature of -40 °C are shown in Table 3.

Note that in order to convert the absorption energy to correspond to that of a 10 mm wide full-size test specimen, the absorption energy listed in Table 3 is 1.5 times the absorption energy of the 5 mm wide sub-size specimen.

[Table 3]

Table 3

| No. | Microstructure of Stirred Portion | Tensile Strength (MPa) | Absorption Energy at -40 °C (J) | | | | Remarks |
|---|---|---|---|---|---|---|---|
| | | | -3 mm | -1 mm | 1 mm | 3 mm | |
| 1 | Fine Bainite | 971 | 146 | 151 | 169 | 156 | Example |
| 2 | Fine Bainite | 989 | 148 | 155 | 175 | 161 | Example |
| 3 | Fine Bainite | 995 | 133 | 139 | 138 | 138 | Example |
| 4 | Fine Bainite | 950 | 123 | 119 | 137 | 130 | Example |
| 5 | Fine Bainite | 810 | 164 | 151 | 174 | 141 | Example |
| 6 | Fine Bainite | 840 | 171 | 165 | 193 | 163 | Example |
| 7 | Fine Bainite | 845 | 173 | 160 | 189 | 165 | Example |
| 8 | Fine Bainite + Martensite | 1015 | 130 | 101 | 95 | 109 | Comparative Example |
| 9 | Coarse Bainite | 756 | 87 | 36 | 40 | 63 | Comparative Example |
| 10 | Coarse Bainite | 766 | 54 | 49 | 65 | 52 | Comparative Example |
| 11 | Coarse Bainite | 784 | 83 | 55 | 77 | 51 | Comparative Example |
| 12 | Coarse Bainite + Fine Bainite | 813 | 112 | 91 | 134 | 93 | Comparative Example |
| 13 | Coarse Bainite + Fine Bainite | 809 | 98 | 81 | 113 | 92 | Comparative Example |
| 14 | Coarse Ferrite | 612 | 126 | 72 | 121 | 87 | Comparative Example |
| 15 | Coarse Ferrite | 580 | 91 | 64 | 89 | 74 | Comparative Example |
| 16 | Fine Bainite | 840 | 131 | 136 | 152 | 140 | Example |
| 17 | Fine Bainite | 912 | 180 | 166 | 191 | 155 | Example |
| 18 | Fine Bainite | 810 | 117 | 121 | 135 | 125 | Example |
| 19 | Fine Bainite | 931 | 171 | 158 | 181 | 147 | Example |
| 20 | Fine Bainite | 875 | 156 | 144 | 170 | 149 | Example |
| 21 | Fine Bainite | 984 | 173 | 181 | 179 | 179 | Example |
| 22 | Fine Bainite | 966 | 179 | 162 | 189 | 173 | Example |
| 23 | Coarse Bainite | 782 | 59 | 54 | 72 | 57 | Comparative Example |
| 24 | Fine Bainite + Martensite | 1060 | 117 | 91 | 86 | 98 | Comparative Example |
| 25 | Coarse Bainite | 910 | 43 | 39 | 52 | 42 | Comparative Example |
| 26 | Fine Bainite | 996 | 120 | 115 | 132 | 127 | Example |

It can be seen from Table 3 that, in all of the examples of Nos. 1 to 7, 16 to 22, and 26, the tensile strength was 800 MPa or more and the Charpy absorption energy at four different notch positions: -3 mm, -1 mm, 1 mm, and 3 mm at a test temperature of -40 °C was all 100 J or more.

By contrast, the results of the comparative examples of Nos. 8 to 15 and 23 to 25 showed that (i) the tensile strength was less than 800 MPa and/or (ii) the Charpy absorption energy at four different notch positions: -3 mm, -1 mm, 1 mm, and 3 mm at a test temperature of -40 °C was less than 100 J at one or more sites.

REFERENCE SIGNS LIST

1   Rotational tool

2   Shoulder

3   Pin

4   Axis of rotation

5   Steel plate

6    Weld portion

**Claims**

1.  A friction stir welding method comprising:

inserting a rotational tool into a weld portion of steel sheets or plates, the rotational tool comprising a shoulder and a pin disposed on the shoulder and sharing an axis of rotation with the shoulder, at least the shoulder and pin being made of a material harder than the steel sheets or plates as working materials; and
moving the rotational tool while rotating the tool, so that the steel sheets or plates are softened by frictional heat generated between the rotational tool and the steel sheets or plates, and a plastic flow is generated by the softened part being stirred by the rotational tool, and the steel sheets or plates are welded, wherein
the steel sheets or plates are each made of high-strength welding structural steel having a chemical composition consisting of by mass%

C: 0.03 % to 0.12 %,
Si: 0.6 % or less,
Mn: 1.5 % to 3.0 %,
P: 0.015 % or less,
S: 0.002 % or less,
Al: 0.1 % or less,
Ti: 0.005 % to 0.030 %,
Nb: 0.01 % to 0.10 %,
N: 0.001 % to 0.008%,
O: 0.03 % or less,
and optionally further <u>one or more elements selected from</u>
Cu: 1.0 % or less,
Ni: 1.5 % or less,
Mo: 1.0 % or less,
Cr: 1.0 % or less,
V: 0.10 % or less,
W: 0.2 % to 1.2 %,
B: 0.0001 % to 0.005 %,
Ca: 0.01 % or less,
REM: 0.02 % or less,
Mg: 0.01 % or less, and
Zr: 0.0005 % to 0.03 %,
a Pcm value calculated by the following formula (1) satisfying $0.18 \leq Pcm \leq 0.30$, and
the balance being Fe and incidental impurities,

friction stir welding conditions fall under ranges of

tool rotational speed: 100 rpm to 1000 rpm,
tool rotational torque: 50 N·m to 500 N·m, and
welding speed: 10 mm/min to 1000 mm/min, and

a welding heat input HI defined by the following formula (2) falls under a range of 1.5 to 20, and satisfies a range of the following formula (3) in relation with Pcm,

$$Pcm\ (\%) = C + Si/30 + (Mn + Cr + Cu)/20 + Ni/60 + Mo/15 + V/10 + 5B \text{ --- (1)}$$

$$HI\ (kJ/mm) = (6.28 \times RT \times RS)/TS/1000 \text{ --- (2)}$$

where RT represents tool rotational torque (N·m), RS represents tool rotational speed (rpm), and TS represents welding speed (mm/min),

$$1.5 \times 10^9 \times (\mathrm{Pcm})^{13.8} \leq \mathrm{HI} \leq 2.1 \times 10^8 \times (\mathrm{Pcm})^{10.6} \text{ --- (3)}.$$

## Patentansprüche

1.  Reibrührschweißverfahren, umfassend:

    Einführen eines Rotationswerkzeugs in einen Schweißabschnitt von Stahlblechen oder -platten, wobei das Rotationswerkzeug eine Schulter und einen Stift, der auf der Schulter angeordnet ist und eine gemeinsame Drehachse mit der Schulter hat, umfasst, wobei zumindest die Schulter und der Stift aus einem Material hergestellt sind, das härter ist als die Stahlbleche oder -platten als Arbeitsmaterialien, und
    Bewegen des Rotationswerkzeugs, während sich das Werkzeug dreht, so dass die Stahlbleche oder -platten durch Reibungswärme, die zwischen dem Rotationswerkzeug und den Stahlblechen oder -platten erzeugt wird, erweicht werden und ein plastischer Fluss durch das erweichte Teil, das durch das Rotationswerkzeug gerührt wird, erzeugt wird und die Stahlbleche oder -platten geschweißt werden, wobei

    die Stahlbleche oder -platten jeweils aus hochfestem Schweißbaustahl hergestellt sind, der eine chemische Zusammensetzung aufweist, welche in Masse-% aus

    C: 0,03 % bis 0,12 %,
    Si: 0,6 % oder weniger,
    Mn: 1,5 % bis 3,0 %,
    P: 0,015 % oder weniger,
    S: 0,002 % oder weniger,
    Al: höchstens 0,1 %,
    Ti: 0,005 % bis 0,030 %,
    Nb: 0,01 % bis 0,10 %,
    N: 0,001 % bis 0,008 %,
    O: 0,03 % oder weniger,
    und gegebenenfalls zusätzlich einem oder mehreren Elementen, ausgewählt aus
    Cu: 1,0 % oder weniger,
    Ni: 1,5 % oder weniger,
    Mo: 1,0 % oder weniger,
    Cr: 1,0 % oder weniger,
    V: 0,10 % oder weniger,
    W: 0,2 % bis 1,2 %,
    B: 0,0001 % bis 0,005 %,
    Ca: 0,01 % oder weniger,
    REM: 0,02 % oder weniger,
    Mg: 0,01 % oder weniger, und
    Zr: 0,0005 % bis 0,03 %,
    einem nach der folgenden Formel (1) berechneten Pcm-Wert, der $0,18 \leq \mathrm{Pcm} \leq 0,30$ genügt,

    besteht und
    der Rest Fe und zufällige Verunreinigungen sind,
    die Bedingungen für das Reibrührschweißen in folgende Bereiche fallen:

    Werkzeugdrehzahl: 100 U/min bis 1000 U/min,
    Werkzeugdrehmoment: 50 N·m bis 500 N·m,
    Schweißgeschwindigkeit: 10 mm/min bis 1000 mm/min, und

    eine Schweißwärmezufuhr HI, die durch die folgende Formel (2) definiert ist, in einen Bereich von 1,5 bis 20 fällt und einen Bereich der folgenden Formel (3) in Beziehung zu Pcm erfüllt,

$$Pcm\,(\%) = C + Si/30 + (Mn + Cr + Cu)/20 + Ni/60 + Mo/15 + V/10 + 5B \;\text{---}\; (1)$$

$$HI\,(kJ/mm) = (6{,}28 \times RT \times RS)/TS/1000 \;\text{---}\; (2),$$

wobei RT das Werkzeugdrehmoment (N·m), RS für die Werkzeugdrehzahl (U/min) darstellt und TS für die Schweißgeschwindigkeit (mm/min) steht,

$$1{,}5 \times 10^9 \times (Pcm)^{13{,}8} \le HI \le 2{,}1 \times 10^8 \times (Pcm)^{10{,}6} \;\text{---}\; (3).$$

**Revendications**

1.  Procédé de soudage par friction-malaxage comprenant les étapes consistant à :

insérer un outil rotatif dans une partie de soudure de tôles ou plaques d'acier, l'outil rotatif comprenant un épaulement et une goupille disposée sur l'épaulement et partageant un axe de rotation avec l'épaulement, au moins l'épaulement et la goupille étant constitués d'un matériau plus dur que les tôles ou plaques d'acier en tant que matériaux d'usinage ; et
déplacer l'outil rotatif tout en faisant tourner l'outil, de sorte que les tôles ou plaques d'acier sont ramollies par chaleur de friction générée entre l'outil rotatif et les tôles ou plaques d'acier, et un écoulement plastique est généré par la partie ramollie qui est malaxée par l'outil rotatif, et les tôles ou plaques d'acier sont soudées, dans lequel les tôles ou plaques d'acier sont chacune constituées d'un acier de construction par soudage à haute résistance ayant une composition chimique constituée en % en masse de
C: 0,03 %à 0,12 %,
Si : 0,6 % ou moins,
Mn : 1,5 % à 3,0 %,
P : 0,015 % ou moins,
S : 0,002 % ou moins,
Al : 0,1 % ou moins,
Ti : 0,005 % à 0,030 %,
Nb: 0,01 % à 0,10 %,
N : 0,001 % à 0,008 %,
O : 0,03 % ou moins,
et facultativement en outre d'un ou plusieurs éléments choisis parmi
Cu : 1,0 % ou moins,
Ni : 1,5 % ou moins,
Mo : 1,0 % ou moins,
Cr : 1,0 % ou moins,
V : 0,10 % ou moins,
W : 0,2 % à 1,2 %,
B : 0,0001 % à 0,005 %,
Ca : 0,01 % ou moins,
REM : 0,02 % ou moins,
Mg : 0,01 % ou moins, et
Zr : 0,0005 % à 0,03 %,
une valeur Pcm calculée par la formule suivante (1) satisfaisant à $0{,}18 \le Pcm \le 0{,}30$, et
le reste étant Fe et des impuretés accidentelles,
les conditions de soudage par friction-malaxage se situent dans des plages de vitesse de rotation d'outil : 100 tours/min à 1 000 tours/min,
couple de rotation d'outil : 50 N·m à 500 N·m, et
vitesse de soudage : 10 mm/min à 1 000 mm/min, et
un apport de chaleur de soudage HI défini par la formule suivante (2) se situe dans une plage de 1,5 à 20, et satisfait à une plage de la formule suivante (3) en relation avec Pcm,

$$Pcm\ (\%) = C + Si/30 + (Mn + Cr + Cu)/20 + Ni/60 + Mo/15 + V/10 + 5B \ \text{---} \ (1)$$

$$HI\ (kJ/mm) = (6{,}28 \times RT \times RS)/TS/1\ 000 \ \text{---} \ (2)$$

où RT représente le couple de rotation d'outil (N·m), RS représente la vitesse de rotation d'outil (tour/min), et TS représente la vitesse de soudage (mm/min),

$$1{,}5 \times 10^9 \times (Pcm)^{13{,}8} \leq HI \leq 2{,}1 \times 10^8 \times (Pcm)^{10{,}6} \ \text{---} \ (3).$$

# FIG. 1

FIG. 2

FIG. 3

## FIG. 4

Heat-affected zone     Stirred portion

Weld line center     Heat-affected zone

Upper surface

Center in thickness direction

R     A

Lower surface

Parallel portion diameter φ4 mm

Upper surface

Parallel portion length 32 mm

Gauge length 24 mm

# FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S62183979 A
- JP H7505090 A
- JP 2003532542 A
- JP 2003532543 A
- JP 200831494 A
- JP 2012086924 A
- WO 2013150801 A1

### Non-patent literature cited in the description

- *Summary of Japan Welding Society National Meeting Lecture,* 2010, vol. 87, 331